Europäisches Patentamt

European Patent Office

Office européen des brevets

(11) Publication number: **0 108 441**
**B1**

# EUROPEAN PATENT SPECIFICATION

(45) Date of publication of patent specification: **27.01.88**

(51) Int. Cl.⁴: **B 62 K 25/08**

(21) Application number: **83201508.5**

(22) Date of filing: **20.10.83**

(54) Apparatus for the spring-mounted suspension of a wheel of a motor vehicle.

(30) Priority: **01.11.82 NL 8204232**
**12.01.83 NL 8300094**

(43) Date of publication of application:
**16.05.84 Bulletin 84/20**

(45) Publication of the grant of the patent:
**27.01.88 Bulletin 88/04**

(84) Designated Contracting States:
**AT BE CH DE FR GB IT LI LU NL SE**

(56) References cited:
**WO-A-82/00445**
**FR-A-1 025 471**
**FR-A-2 318 778**
**FR-A-2 503 082**
**GB-A-2 073 680**
**US-A-4 367 882**

(73) Proprietor: **van Eyden, Theodorus Johannes**
**Houtense Wetering 3**
**NL-3991 LJ Houten (NL)**

(72) Inventor: **van Eyden, Theodorus Johannes**
**Houtense Wetering 3**
**NL-3991 LJ Houten (NL)**

(74) Representative: **de Vries, Johannes Hendrik**
**Fokke et al**
**Octrooibureau Los en Stigter B.V. P.O. Box**
**20052**
**NL-1000 HB Amsterdam (NL)**

Courier Press, Leamington Spa, England.

## Description

The invention relates to an apparatus according to the preamble of claim 1.

An apparatus of this kind is known from GB—A—2 073 680. At this known apparatus the cylinder piston assembly is filled with oil and connected by an oil filled tube to the upper end of the upper leg, in which a piston is slidably mounted. This piston acts upon a helical spring mounted in the closed space. In order to increase the spring bias force at braking oil has to be moved by the cylinder piston assembly through the tube in order to move the piston mounted in the upper leg and to compress the helical spring. In order to move the oil and the piston friction forces have to be overcome, so that a certain minimum force is required. This means that a minimum braking force will be needed in order to provide this minimum force. Thereby, the motor-vehicle could first dive and as soon as the braking force will be high enough the spring bias force will be increased, whereby the inner and outer legs will slide out of each other again.

The invention aims to prove an apparatus of the above-mentioned kind wherein these disadvantages are obviated in a simple manner.

To this end the apparatus according to the invention is distinguished by the features of the characterizing portion of claim 1.

By these features the construction of the apparatus is simplified and friction forces are substantially decreased. The working space of the cylinder piston assembly and the closed space in the inner and outer legs form a closed system, wherein the spring bias force will be increased before any braking of the motor vehicle starts so that diving of the motor-vehicle will be effectively obviated.

The invention will hereinafter be further explained by reference to the drawings in which a front fork of a motor-cycle is shown, comprising an embodiment of the apparatus according to the invention.

The front fork of a motor-cycle consists of two spring legs 1, only one of which being shown in the drawings. Between these spring legs or apparatuses 1 for the spring-mounted suspension of a wheel, a front wheel 3 is mounted by means of an axis 2. Each apparatus 1 consists of an inner leg 4 and an outer leg 5, which can telescopingly slide in each other. In order to prevent that dirt and the like can penetrate into the interior of the apparatus 1, a rubber bush 6 is provided. The inner leg 4 and the outer leg 5 determine a closed spaced in which a gas under pressure is provided whereby the desired spring operation is obtained. This closed space is accessible through a nipple 7 mounted at the upper end of the inner leg 4. The gas mas consist of a pure gas as for example $CO_2$ or of a mixture of a plurality of gasses. The gas pressure may be higher than or equal to the atmospheric pressure.

The wheel 3 is provided with a brake drum 8 and a back plate 9 in a normal way. This back plate 9 carries brake segments not shown in the drawings, the brake linings of which can be pressed against the brake drum 8 in a usual manner for braking of the motor-cycle.

The back plate 9 is provided with a support 10 rotatably connected with a piston rod 11 of a cylinder piston assembly 12. The end of the cylinder 13 opposite of the piston rod 11 is provided with a coupling piece 14 rotatably connected with a clamp 15 mounted on the outer leg 5. The cylinder space lying at the side of the piston (not shown) opposite of the piston rod 11, is connected with the nipples 7 of both apparatuses 1 by means of a tube 16. It is noted that the term cylinder piston assembly also indicates an assembly comprising a closed cylinder space the volume of which can be varied, such as a cylinder plunger assembly or a cylinder membrane assembly.

As the back plate 9, except of the coupling with the outer leg 5 by the cylinder piston assembly 12, is freely rotatable around the axis 2 of the wheel 3, the back plate 9 will rotate with the wheel 3 along a certain angular distance at braking of the motor-cycle, so that the support 10 will push in the piston rod 11 and the amount of gas in the closed space determined by the inner and outer legs 4, 5 is increased. Thereby, the pressure in this closed space increases and the distance along which the inner leg 4 can slide into the outer leg 5 will decrease so that ball-head angle and the trailing distance will not change much and the steerability of the motor-cycle is maintained.

If the motor-cycle is braked only lightly, the angular distance along which the back plate 9 is rotated will not be very great in view of the pressure of the gas, so that in this case the amount of gas in the closed space is hardly changed and the normal spring operation remains maintained. However, as the motor-cycle is braked stronger and the distance along which the inner leg 4 would slide into the outer leg 5 and thereby the change of the ball-head angle and the trailing distance would increase, the back plate 9 will rotate along a greater angular distance so that the amount of gas in the closed spaced is substantially increased and the so-called dipping of the motor-cycle is counteracted to a large extent.

It is noted that the apparatus according to the invention is described by reference to a front fork of a motor-cycle by way of example only. The apparatus could for example also be used for the spring-mounted suspension of the front wheels of a motor-car.

Further, it is noted that the coupling between the cylinder 13 and the spring leg 1 shown in the drawings, is only schematically shown and, of course, can be achieved in another way. For example, it is also possible to connect the cylinder 13 to the lower end of the spring leg 1.

The invention can also be used at a spring leg of the type with an oil damping system, for example.

Further, the application of the invention is not restricted to a motor-cycle with a brake drum system. On the contrary, the invention can also be used at a motor-cycle with a brake disc system. In this case the cylinder piston assembly is operated by the brake claws carrying the brake pads.

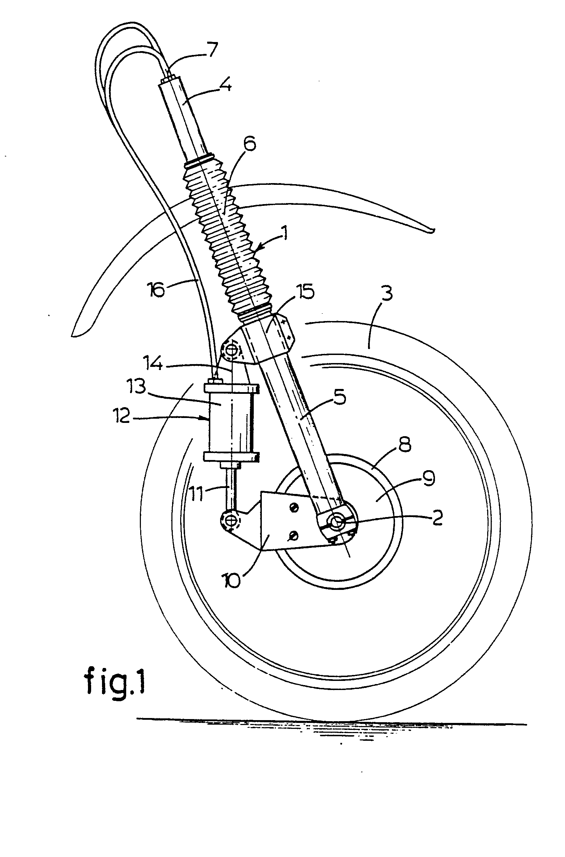

**Claims**

1. Apparatus for the spring-mounted suspension of a wheel (3) of a motor-vehicle, in particular a motor-cycle, comprising an inner (4) and outer leg (5) which are telescopingly slidable in each other, against the action of a spring means, at least partially formed by a gas mixture provided in a closed space at least under atmospheric pressure, said space lying within the inner (4) and outer legs (5), and a cylinder piston assembly (13) for increasing the spring bias force of the spring means at braking of the motor vehicle, said cylinder piston assembly (13) being connected with the outer leg (5) at one end and at the other end with a brake segment carrier (10) of the wheel (3), which brake segment carrier (10) is rotatably mounted around the wheel axis (2), characterized in that the cylinder space of the cylinder piston assembly (13) which decreases at braking is filled with the gas mixture and is directly connected with said closed space for increasing the pressure of the gas mixture in the closed space.

2. Front fork for a motor-cycle, characterized by at least one apparatus according to claim 1.

3. Front fork for a motor-cycle according to claim 2, characterized in that the closed spaces determined by the inner and outer legs at both sides of the front wheel, are interconnected.

**Patentansprüche**

1. Vorrichtung für die gefederte Aufhängung eines Rades (3) eines Kraftfahrzeuges, insbesondere eines Motorrades, mit einem inneren (4) und einem äußeren Bein (5), die gegen die Wirkung einer Federeinrichtung teleskopisch ineinanderschiebbar sind, wobei die Federeinrichtung wenigstens zum Teil aus einer zumindest unter atmosphärischem Druck stehenden Gasmischung besteht, die in einem geschlossenen Zwischenraum innerhalb des inneren (4) und äußeren Beines (5) vorgesehen ist, und einer Zylinder-Kolbeneinheit (13) zur Erhöhung der Federvorspannkraft bei der Bremsung des Kraftfahrzeuges, welche Zylinder-Kolbeneinheit (13) an dem einen Ende mit dem äußeren Bein (5) und an dem anderen Ende mit einem Bremssegmentträger (10) des Rades verbunden ist, welcher Bremssegmentträger (10) um die Radachse (2) drehbar montiert ist, dadurch gekennzeichnet, daß der sich beim Bremsvorgang verkleinernde Zylinderraum der Zylinder-Kolbeneinheit (13) mit der Gasmischung gefüllt und direckt mit dem geschlossenen Zwischenraum zwecks Erhöhung des Druckes der Gasmischung in diesem Zwischenraum verbunden ist.

2. Vorderradgabel für ein Motorrad, gekennzeichnet durch wenigstens eine Vorrichtung nach Anspruch 1.

3. Vorderradgabel für ein Motorrad nach Anspruch 2, dadurch gekennzeichnet, daß die von den inneren und äußeren Beinen an beiden Seiten des Vorderrades bestimmten geschlossenen Zwischenräume untereinander verbunden sind.

**Revendications**

1. Dispositif pour la suspension montée sur ressort d'une roue (3) d'un véhicule à moteur, en particulier une motocyclette, comprenant des branches intérieure (4) et extérieure (5) qui peuvent coulisser télescopiquement l'une dans l'autre contre l'action d'un moyen à ressort, formé au moins partiellement par un mélange gazeux placé dans un espace fermé, au moins à la pression atmosphérique, ledit espace s'étendant à l'intérieur des branches intérieure (4) et extérieure (5), et un ensemble (13) à cylindre et piston destiné à augmenter la force de rappel du moyen à ressort lors du freinage du véhicule à moteur, ledit ensemble (13) à cylindre et piston étant relié à la branche extérieure (5) par une extrémité et, par l'autre extrémité, un support (10) de segments de frein de la roue (3), lequel support (10) de segments de frein est monté façon à pouvoir tourner autour de l'axe (2) de la roue, caractérisé en ce que l'espace cylindrique de l'ensemble (13) à cylindre et piston, qui diminue lors du freinage, est rempli du mélange gazeux et est relié directement audit espace fermé pour élever la pression du mélange gazeux dans l'espace fermé.

2. Fourche avant pour une motocyclette, caractérisée par au moins un dispositif selon la revendication 1.

3. Fourche avant pour une motocyclette selon la revendication 2, caractérisée en ce que les espacés fermés déterminés par les branches intérieure et extérieure sur les deux côtés de la roue avant sont reliées entre eux.

fig.1